# EUROPÄISCHE PATENTSCHRIFT

(11) **EP 2 253 759 B1**
(45) Veröffentlichungstag und Bekanntmachung des Hinweises auf die Patenterteilung: **18.01.2012**
(21) Anmeldenummer: 10160533.5
(22) Anmeldetag: 21.04.2010
(51) Int. Cl.: D21F 3/10

(54) **Dichtvorrichtung für eine Saugwalze**
Sealing head for a suction roll
Dispositif d'étanchéité pour un cylindre aspirant

(30) Priorität: 19.05.2009 DE 202009007134 U
(43) Veröffentlichungstag der Anmeldung: 24.11.2010
(73) Patentinhaber: Voith Patent GmbH, 89522 Heidenheim (DE)
(72) Erfinder: Weiß, Valentin, 3151 St. Georgen (DE)

(56) Entgegenhaltungen:
- EP-A2- 1 344 865
- US-A- 2 969 837

## Beschreibung

Die Erfindung betrifft eine Dichtvorrichtung für eine Saugwalze einer Maschine zur Herstellung und/oder Veredelung einer Faserstoffbahn, insbesondere Papier-, Karton- oder Tissuebahn, mit wenigstens einem Formatschieber zum seitlichen Abdichten einer Saugkammer der Saugwalze gegen deren Mantelinnenfläche, wobei der Formatschieber einen in einer Führung in Axialrichtung der Saugwalze verschiebbaren Formatschieberhalter und ein in diesem aufgenommenes, mit der Innenfläche des Saugwalzenmantels in Kontakt bringbares Formatschieberdichtelement umfasst.

In einer Maschine zur Herstellung und/oder Veredelung einer Faserstoffbahn, insbesondere Papier-, Karton- oder Tissuebahn, werden Saugwalzen beispielsweise als Abnahmesaugwalzen oder Saugleitwalzen eingesetzt. Deren Saugkammern müssen jeweils gegen den rotierenden Walzenmantel abgedichtet werden, wozu in der Regel Längsdichtleisten und seitliche Dichtelemente vorgesehen sind, die zumindest teilweise insbesondere Teil eines jeweiligen in Axialrichtung der Saugwalze verstellbaren Formatschiebers sein können. Dabei kann ein solcher Formatschieber beispielsweise manuell verstellbar und form- und/oder kraftschlüssig feststellbar oder z.B. elektromechanisch verstellbar sein.

Eine derartige Saugwalze mit einem Formatschieber ist beispielsweise in der US 2969837 A offenbart.

Die seitliche Randabdichtung einer jeweiligen Saugkammer einer Saugwalze in einer Papiermaschine kann also mit beweglichen Formatschiebern erfolgen. Beim. Verstellen eines Formatschiebers kann es nun aber zu Blockaden kommen, wenn dieser in seiner Führung schwergängig ist.

Eine solche Schwergängigkeit kann unter anderem durch Papierstoffablagerungen im Verstellbereich des Formatschiebers verursacht sein.

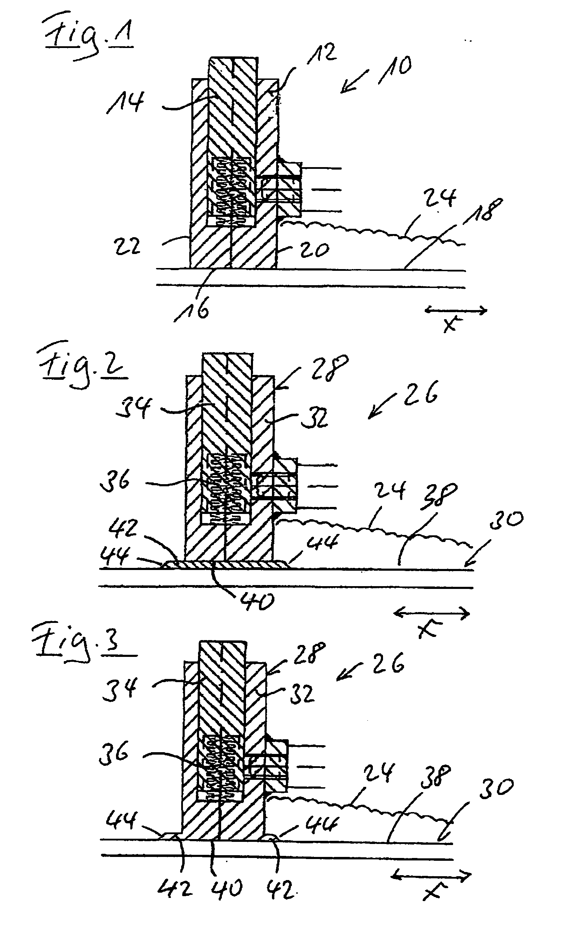

Fig. 1 der Zeichnung zeigt in schematischer Darstellung einen herkömmlichen Formatschieber 10 mit einem Formatschieberhalter 12 und einem in diesem aufgenommenen, mit der Innenfläche des Mantels der betreffenden Saugwalze in Kontakt bringbaren Formatschieberdichtelement 14.

Der Formatschieberhalter 12 ist in einer Führung in Axialrichtung X der Saugwalze verschiebbar. Dabei steht der Formatschieberhalter 12 mit seiner Unterseite 16 in Kontakt mit einer Gleitfläche 18 der Führung. An die beispielsweise ebene Unterseite 16 des Formatschieberhalters 12 grenzen eine in Axialrichtung X betrachtet vordere und hintere Halterseite 20 bzw. 22 an, die zur Unterseite 16 jeweils senkrecht stehen und mit dieser jeweils eine rechteckige Kante bilden.

Insbesondere bei Papierstoffablagerungen 24 im Verstellbereich des Formatschiebers 10 kann es hierbei aufgrund der damit einhergehenden Schwergängigkeit zu Blockaden beim Verstellen kommen.

Der Erfindung liegt die Aufgabe zugrunde, eine verbesserte Dichtvorrichtung der eingangs genannten Art zu schaffen, bei der die Gefahr einer Blockade bei der Verstellung eines jeweiligen Formatschiebers auf ein Minimum reduziert ist.

Diese Aufgabe wird erfindungsgemäß dadurch gelöst, dass der Formatschieberhalter auf wenigstens einer einer Gleitfläche der Führung zugewandten Seite mit einem Abstreifelement versehen ist, das mit der Gleitfläche der Führung in Kontakt steht und mit dem Formatschieber entlang dieser Gleitfläche in Axialrichtung verschiebbar ist.

Aufgrund dieser Ausbildung ergibt sich mit einer jeweiligen Verstellung des Formatschiebers gleichzeitig eine Reinigung der betreffenden Saugkammer im Verstellbereich des Formatschieberhalters. Ein vorzeitiger Maschinenstillstand aufgrund eines möglichen Ausfalls der Formatverstellung aufgrund einer Blockade wird somit vermieden. Insbesondere in Verbindung mit einer beispielsweise elektromechanischen Formatverstellung wird angesichts des geringeren Verschiebewiderstands infolge verbesserter Gleiteigenschaften und verbesserter Reinigungswirkung die Runability deutlich erhöht.

Bevorzugt umfasst das Abstreifelement eine Abstreifklinge. Dabei kann es beispielsweise eine Schaberklinge oder dergleichen umfassen.

Gemäß einer zweckmäßigen praktischen Ausführungsform der erfindungsgemäßen Dichtvorrichtung liegt der Formatschieberhalter über das Abstreifelement an der Gleitfläche der Führung an, wobei er über dieses entlang der Gleitfläche in Axialrichtung verschiebbar ist.

Das Abstreifelement ist vorteilhafterweise an der vom Dichtelement abgewandten Unterseite des Formatschieberhalters vorgesehen.

Bevorzugt ist das Abstreifelement an seinem in Axialrichtung der Saugwalze bzw. in Verschieberichtung betrachtet vorderen und/oder hinteren Ende jeweils mit einer Anschrägung oder Fase versehen, wodurch die Reinigungswirkung bei einer jeweiligen Formatverstellung verbessert wird.

Das Abstreifelement kann zumindest teilweise aus Metall bestehen.

Gemäß einer zweckmäßigen Ausführungsform besteht das Abstreifelement zumindest teilweise aus Verbundwerkstoff.

Das Abstreifelement kann beispielsweise getrennt vom Formatschieberhalter ausgeführt und fest mit diesem verbunden sein.

Gemäß einer vorteilhaften praktischen Ausführungsform ist das Abstreifelement in dem Formatschieberhalter integriert.

Der Formatschieberhalter und das Abstreifelement können insbesondere als integrale Einheit ausgebildet sein.

Insbesondere in dem Fall, dass das Abstreifelement in dem Formatschieberhalter integriert ist bzw. der Formatschieberhalter und das Abstreifelement als integrale Einheit ausgebildet sind, kann der Formatschieberhalter und das Abstreifelement vorteilhafterweise aus demselben Material bestehen.

Vorteilhafterweise ist der Formatschieberhalter während eines jeweiligen Maschinenstillstandes, insbesondere unmittelbar nach einem Papierabriss, manuell oder beispielsweise mittels einer elektromechanischen Formatverstellvorrichtung automatisch über den gesamten Formatverstellbereich verschiebbar, um die Kontaktflächen des der Saugwalze zugeordneten Saugkastens sauber zu halten.

Die Erfindung wird im Folgenden anhand eines Ausführungsbeispiels unter Bezugnahme auf die Zeichnung näher beschrieben; in dieser zeigen:
- Fig. 1: eine schematische Darstellung eines herkömmlichen Formatschiebers,
- Fig. 2: eine schematische Darstellung einer beispielhaften Ausführungsform der erfindungsgemäßen Dichtvor- richtung mit einem getrennt vom Formatschieberhalter ausgeführten, fest mit diesem verbundenen Abstreif- element und
- Fig. 3: eine schematische Darstellung einer weiteren beispiel- haften Ausführungsform der erfindungsgemäßen Dichtvorrichtung, bei der der Formatschieberhalter und das Abstreifelement jedoch als integrale Einheit ausgebildet sind.

Fig. 2 zeigt in schematischer Darstellung eine beispielhafte Ausführungsform der erfindungsgemäßen Dichtvorrichtung 26 für eine Saugwalze einer Maschine zur Herstellung und/oder Veredelung einer Faserstoffbahn, insbesondere Papier-, Karton- oder Tissuebahn.

Die Dichtvorrichtung 26 umfasst wenigstens einen Formatschieber 28 zum seitlichen Abdichten einer Saugkammer der Saugwalze gegen deren Mantelinnenfläche.

Wie anhand der Fig. 2 zu erkennen ist, umfasst der Formatschieber 28 einen in einer Führung 30 in Axialrichtung X der Saugwalze verschiebbaren Formatschieberhalter 32 und ein in diesem aufgenommenes, mit der Innenfläche des Saugwalzenmantels in Kontakt bringbares Formatschieberdichtelement 34.

Das Formatschieberdichtelement kann beispielsweise über wenigstens eine Feder 36 gegen die Innenfläche des Saugwalzenmantels gedrückt werden, wobei zweckmäßigerweise zumindest zwei solche Federn vorgesehen sind. Grundsätzlich sind jedoch auch beliebige andere Mittel zur entsprechenden Beaufschlagung des Formatschieberdichtelements 34 denkbar.

Der Formatschieberhalter 32 ist auf wenigstens einer einer Gleitfläche 38 der Führung 30 zugewandten Seite 40 mit einem Abstreifelement 42 versehen, das mit der Gleitfläche 38 der Führung 30 in Kontakt steht und mit dem Formatschieber 28 entlang dieser Gleitfläche 38 in Axialrichtung X verschiebbar ist.

Beim vorliegenden Ausführungsbeispiel umfasst das Abstreifelement 42 eine Abstreifklinge. Dabei kann es beispielsweise eine Schaberklinge umfassen.

Wie anhand der Fig. 2 zu erkennen ist, liegt der Formatschieberhalter 32 über das Abstreifelement an der Gleitfläche 38 der Führung 30 an, wobei er über dieses und zusammen mit diesem entlang der Gleitfläche 38 in Axialrichtung X verschiebbar ist.

Das Abstreifelement 42 kann, wie im vorliegenden Fall, insbesondere an der vom Dichtelement 34 bzw. dem Walzenmantel abgewandten Unterseite 40 des Formatschieberhalters 32 vorgesehen sein.

An seinem in Axialrichtung X der Saugwalze bzw. in Verschieberichtung betrachtet vorderen und/oder hinteren Ende kann das Abstreifelement 42 wie dargestellt jeweils mit einer Anschrägung oder Phase 44 versehen sein, wodurch die Reinigungswirkung während eines jeweiligen Verstellens des Formatschiebers 28 weiter verbessert wird.

Das Abstreifelement 42 kann zumindest teilweise aus Metall bestehen. Es ist beispielsweise auch denkbar, dass das Abstreifelement 42 zumindest teilweise aus Verbundwerkstoff besteht.

Beim vorliegenden Ausführungsbeispiel ist das Abstreifelement 42, das hier insbesondere als Abstreifklinge vorgesehen sein kann, getrennt vom Formatschieberhalter 32 ausgeführt und fest mit diesem verbunden.

Angesichts der verbesserten Reinigungswirkung durch das Abstreifelement bzw. die Abstreifklinge 42, ist die Gefahr, dass es aufgrund von Papierstoffablagerungen 24 zu einer Blockade kommt, auf ein Minimum reduziert.

Das Abstreifelement 42 bzw. die Abstreifklinge kann grundsätzlich auch in den Formatschieberhalter 32 integriert sein.

Fig. 3 zeigt in schematischer Darstellung eine weitere beispielhafte Ausführungsform der erfindungsgemäßen Dichtvorrichtung 26, die sich von der gemäß Fig. 2 im Wesentlichen nur dadurch unterscheidet, dass das Abstreifelement 42 bzw. Abstreifklinge in dem Formatschieberhalter integriert ist. Im vorliegenden Fall sind der Formatschieberhalter 32 und das Abstreifelement 42 bzw. Abstreifklinge als integrale Einheit ausgebildet.

Im Übrigen besitzt diese Dichtvorrichtung gemäß Fig. 3 zumindest im Wesentlichen wieder den gleichen Aufbau wie die der Fig. 2. Einander entsprechenden Teilen sind gleiche Bezugszeichen zugeordnet.

Insbesondere beim Ausführungsbeispiel gemäß Fig. 3 können der Formatschieberhalter 32 und das Abstreifelement 42 aus demselben Material bestehen.

Vorteilhafterweise ist der Formatschieberhalter 28 während eines jeweiligen Maschinenstillstandes, insbesondere unmittelbar nach einem Papierabriss, manuell oder beispielsweise mittels einer elektromechanischen Formatverstellvorrichtung automatisch über den gesamten Formatverstellbereich verschiebbar, um die Kontaktflächen des der Saugwalze zugeordneten Saugkastens sauber zu halten. Während eines jeweiligen Maschinenstillstandes wird der Formatschieberhalter also bevorzugt so verschoben, dass er den kompletten Formatverstellbereich durchläuft.

### Bezugszeichenliste

- 10: Formatschieber
- 12: Formatschieberhalter
- 14: Formatschieberdichtelement
- 16: Unterseite
- 18: Gleitfläche
- 20: Halterseite
- 22: Halterseite
- 24: Papierstoffablagerung
- 26: Dichtvorrichtung
- 28: Formatschieber
- 30: Führung
- 32: Formatschieberhalter
- 34: Formatschieberdichtelement
- 36: Feder, Druckfeder
- 38: Gleitfläche
- 40: Seite, Unterseite
- 42: Abstreifelement
- 44: Anschrägung/ Fase

- X: Axialrichtung

## Patentansprüche

1. Dichtvorrichtung (26) für eine Saugwalze einer Maschine zur Herstellung und/oder Veredelung einer Faserstoffbahn, insbesondere Papier-, Karton- oder Tissuebahn, mit wenigstens einem Formatschieber (28) zum seitlichen Abdichten einer Saugkammer der Saugwalze gegen deren Mantelinnenfläche, wobei der Formatschieber (28) einen in einer Führung (30) in Axialrichtung (X) der Saugwalze verschiebbaren Formatschieberhalter (32) und ein in diesem aufgenommenes, mit der Innenfläche des Saugwalzenmantels in Kontakt bringbares Formatschieberdichtelement umfasst,
**dadurch gekennzeichnet,**
**dass** der Formatschieberhalter (32) auf wenigstens einer einer Gleitfläche (38) der Führung (30) zugewandten Seite (40) mit einem Abstreifelement (42) versehen ist, das mit der Gleitfläche (38) der Führung (30) in Kontakt steht und mit dem Formatschieber (28) entlang dieser Gleitfläche (38) in Axialrichtung (X) verschiebbar ist.

2. Dichtvorrichtung nach Anspruch 1,
**dadurch gekennzeichnet,**
**dass** das Abstreifelement (42) eine Abstreifklinge umfasst.

3. Dichtvorrichtung nach Anspruch 1 oder 2,
**dadurch gekennzeichnet,**
**dass** das Abstreifelement (42) eine Schaberklinge umfasst.

4. Dichtvorrichtung nach einem der vorhergehenden Ansprüche,
**dadurch gekennzeichnet,**
**dass** der Formatschieberhalter (32) über das Abstreifelement (42) an der Gleitfläche (38) der Führung (30) anliegt und über dieses entlang der Gleitfläche (38) in Axialrichtung (X) verschiebbar ist.

5. Dichtvorrichtung nach einem der vorhergehenden Ansprüche,
**dadurch gekennzeichnet,**
**dass** das Abstreifelement (42) an der vom Dichtelement abgewandten Unterseite (40) des Formatschieberhalters (32) vorgesehen ist.

6. Dichtvorrichtung nach einem der vorhergehenden Ansprüche,
**dadurch gekennzeichnet,**
**dass** das Abstreifelement (42) an seinem in Axialrichtung (X) der Saugwalze bzw. in Verschieberichtung betrachtet vorderen und/oder hinteren Ende jeweils mit einer Anschrägung oder Fase (44) versehen ist.

7. Dichtvorrichtung nach einem der vorhergehenden Ansprüche,
**dadurch gekennzeichnet,**
**dass** das Abstreifelement (42) zumindest teilweise aus Metall besteht.

8. Dichtvorrichtung nach einem der vorhergehenden Ansprüche,
**dadurch gekennzeichnet,**
**dass** das Abstreifelement (42) zumindest teilweise aus Verbundwerkstoff besteht.

9. Dichtvorrichtung nach einem der vorhergehenden Ansprüche,
**dadurch gekennzeichnet,**
**dass** das Abstreifelement (42) getrennt vom Formatschieberhalter (32) ausgeführt und fest mit diesem verbunden ist.

10. Dichtvorrichtung nach einem der vorhergehenden Ansprüche, **dadurch gekennzeichnet,**
**dass** das Abstreifelement (42) in dem Formatschieberhalter (32) integriert ist.

11. Dichtvorrichtung nach einem der 1-8, Ansprüche 1-8,
**dadurch gekennzeichnet,**
**dass** der Formatschieberhalter (32) und das Abstreifelement (42) als integrale Einheit ausgebildet sind.

12. Dichtvorrichtung nach einem der vorhergehenden Ansprüche,
**dadurch gekennzeichnet,**
**dass** der Formatschieberhalter (32) und das Abstreifelement (42) aus demselben Material bestehen.

13. Dichtvorrichtung nach einem der vorhergehenden Ansprüche,
**dadurch gekennzeichnet,**
**dass** der Formatschieberhalter (28) während eines jeweiligen Maschinenstillstandes, insbesondere unmittelbar nach einem Papierabriss, über den gesamten Formatverstellbereich verschiebbar ist, um die Kontaktflächen des der Saugwalze zugeordneten Saugkastens sauber zu halten.

## Claims

1. Sealing device (26) for a suction roll of a machine for producing and/or finishing a fibrous web, in particular a paper, board or tissue web, having at least one format slider (28) for laterally sealing off a suction chamber of the suction roll with respect to the internal circumferential surface thereof, the format slider (28) comprising a format slider holder (32) that can be displaced in the axial direction (X) of the suction roll in a guide (30), and a format slider sealing element that is accommodated in the said holder (32) and can be brought into contact with the internal surface of the suction roll shell, **characterized in that**
on at least one side (40) facing a sliding surface (38) of the guide (30), the format slider holder (32) is provided with a wiping element (42) which is in contact with the sliding surface (38) of the guide (30) and, together with the format slider (28), can be displaced in the axial direction (X) along this sliding surface (38).

2. Sealing device according to Claim 1,
**characterized in that**
the wiping element (42) comprises a wiper blade.

3. Sealing device according to Claim 1 or 2,
**characterized in that**
the wiping element (42) comprises a ductor blade.

4. Sealing device according to one of the preceding claims,
**characterized in that**
the format slider holder (32) rests on the sliding surface (38) of the guide (30) via the wiping element (42) and can be displaced in the axial direction (X) along the sliding surface (38) by the said wiping element (42).

5. Sealing device according to one of the preceding claims,
**characterized in that**
the wiping element (42) is provided on the underside (40) of the format slider holder (32), facing away from the sealing element.

6. Sealing device according to one of the preceding claims,
**characterized in that**
at its front and/or rear end, viewed in the axial direction (X) of the suction roll and in the displacement direction, the wiping element (42) is in each case provided with a bevel or chamfer (44).

7. Sealing device according to one of the preceding claims,
**characterized in that**
the wiping element (42) consists at least partly of metal.

8. Sealing device according to one of the preceding claims,
**characterized in that**
the wiping element (42) consists at least partly of composite material.

9. Sealing device according to one of the preceding claims,
**characterized in that**
the wiping element (42) is designed separately from the format slider holder (32) and is firmly connected to the latter.

10. Sealing device according to one of the preceding claims,
**characterized in that**
the wiping element (42) is integrated in the format slider holder (32).

11. Sealing device according to one of Claims 1 - 8,
**characterized in that**
the format slider holder (32) and the wiping element (42) are formed as an integral unit.

12. Sealing device according to one of the preceding claims,
**characterized in that**
the format slider holder (32) and the wiping element (42) consist of the same material.

13. Sealing device according to one of the preceding claims,
**characterized in that**
during a respective machine stoppage, in particular immediately after a paper break, the format slider holder (28) can be displaced over the entire format adjustment range, in order to keep the contact surfaces of the suction box associated with the suction roll clean.

## Revendications

1. Dispositif d'étanchéité (26) pour un cylindre aspirant d'une machine de fabrication et/ou d'amélioration d'une nappe fibreuse, notamment d'une nappe de papier, de carton ou de papier tissu, comprenant au moins un coulisseau de dimensionnement (28) pour l'étanchéité latérale d'une chambre d'aspiration du cylindre aspirant contre sa surface d'enveloppe interne, le coulisseau de dimensionnement (28) comprenant un dispositif de retenue de coulisseau de dimensionnement (32) déplaçable dans un guide (30) dans la direction axiale (X) du cylindre aspirant, et un élément d'étanchéité de coulisseau de dimensionnement reçu dans celui-ci, pouvant être amené en contact avec la surface interne de l'enveloppe du cylindre aspirant,
**caractérisé en ce que**
le dispositif de retenue de coulisseau de dimensionnement (32) est pourvu sur au moins un côté (40) tourné vers une surface de glissement (38) du guide (30) d'un élément de raclage (42) qui est en contact avec la surface de glissement (38) du guide (30) et qui peut être déplacé avec le coulisseau de dimensionnement (28) le long de cette surface de glissement (38) dans la direction axiale (X).

2. Dispositif d'étanchéité selon la revendication 1,
**caractérisé en ce que**
l'élément de raclage (42) comprend une lame de raclage.

3. Dispositif d'étanchéité selon la revendication 1 ou 2,
**caractérisé en ce que**
l'élément de raclage (32) comprend une lame de racloir.

4. Dispositif d'étanchéité selon l'une quelconque des revendications précédentes,
**caractérisé en ce que**
le dispositif de retenue de coulisseau de dimensionnement (32) s'applique par le biais de l'élément de raclage (42) contre la surface de glissement (38) du guide (30) et peut être déplacé par le biais de celui-ci le long de la surface de glissement (38) dans la direction axiale (X).

5. Dispositif d'étanchéité selon l'une quelconque des revendications précédentes,
**caractérisé en ce que**
l'élément de raclage (42) est prévu sur le côté inférieur (40) du dispositif de retenue de coulisseau de dimensionnement (32) opposé à l'élément d'étanchéité.

6. Dispositif d'étanchéité selon l'une quelconque des revendications précédentes,
**caractérisé en ce que**
l'élément de raclage (42) est pourvu sur son extrémité avant et/ou arrière, considérée dans la direction axiale (X) du cylindre aspirant ou dans la direction de déplacement, à chaque fois d'un biseau ou d'un chanfrein (44).

7. Dispositif d'étanchéité selon l'une quelconque des revendications précédentes,
**caractérisé en ce que**
l'élément de raclage (42) se compose au moins en partie de métal.

8. Dispositif d'étanchéité selon l'une quelconque des revendications précédentes,
**caractérisé en ce que**
l'élément de raclage (42) se compose au moins en partie d'un matériau composite.

9. Dispositif d'étanchéité selon l'une quelconque des revendications précédentes,
**caractérisé en ce que**
l'élément de raclage (42) est réalisé de manière séparée du dispositif de retenue de coulisseau de dimensionnement (32) et est connecté fixement à celui-ci.

10. Dispositif d'étanchéité selon l'une quelconque des revendications précédentes,
**caractérisé en ce que**
l'élément de raclage (42) est intégré dans le dispositif de retenue de coulisseau de dimensionnement (32).

11. Dispositif d'étanchéité selon l'une quelconque des revendications 1 à 8,
**caractérisé en ce que**
le dispositif de retenue de coulisseau de dimensionnement (32) et l'élément de raclage (42) sont réalisés sous forme d'unité intégrée.

12. Dispositif d'étanchéité selon l'une quelconque des revendications précédentes,
**caractérisé en ce que**
le dispositif de retenue de coulisseau de dimensionnement (32) et l'élément de raclage (42) se composent du même matériau.

13. Dispositif d'étanchéité selon l'une quelconque des revendications précédentes,
**caractérisé en ce que**
le dispositif de retenue de coulisseau de dimensionnement (32) peut être déplacé pendant un arrêt respectif de la machine, notamment immédiatement après une rupture du papier, sur toute la plage de réglage de dimensionnement, afin de maintenir propres les surfaces de contact de la caisse aspirante associée au cylindre aspirant.
